# EUROPÄISCHE PATENTANMELDUNG

(11) **EP 1 248 356 A2**
(43) Veröffentlichungstag der Anmeldung: **09.10.2002**
(21) Anmeldenummer: 02100338.9
(22) Anmeldetag: 04.04.2002
(51) Int. Cl.: H02M 3/335

(54) **Stromversorgungsschaltungsanordnung mit einem DC/DC-Konverter**

(30) Priorität: 06.04.2001 DE 10117301
(71) Anmelder: Philips Corporate Intellectual Property GmbH, 20099 Hamburg (DE); Koninklijke Philips Electronics N.V., 5621 BA Eindhoven (NL)
(72) Erfinder: Tolle, Tobias, c/o Philips Corp.Intell.Prop., 52066, Aachen (DE); Domensino, Hendrikus J.J., c/o Philips Corp.Intell, 52066, Aachen (DE); Boswinkel, Hendrik J., c/o Philips Intell.Prop., 52066, Aachen (DE); van den Berg, Arjan, c/o Philips Intell.Prop., 52066, Aachen (DE); Janssen, Hendrikus J., c/o Philips Corp.Intell.Pro, 52066, Aachen (DE)
(74) Vertreter: Volmer, Georg, Dipl.-Ing.

(57) **Zusammenfassung**

Die Erfindung betrifft eine Stromversorgungsschaltungsanordnung (2, 3) mit einem DC/DC-Konverter (3) mit
- einer ein erstes (4, 21) und ein zweites (5, 20) Schaltelement aufweisenden und im Betrieb der Stromversorgungsschaltungsanordnung (2, 3) zwischen einem ersten und zweiten Gleichspannungspotential liegenden Halbbrücke,
- einem Transformator (7, 23), dessen Primärwicklung gemeinsam mit einem ersten kapazitiven Element (6, 22) in einem parallel zum ersten Schaltelement (4, 21) liegenden Schaltungszweig angeordnet ist, wobei das kapazitive Element innerhalb des Schaltungszweiges in Reihe zu der Primärwicklung liegt und
- einer primärseitigen Regelschleife zur Regelung der Spannung (V₀) an der Primärwicklung des Transformators (7, 23) durch Anpassung von Steuersignalen (a1, a2, b1, b2) für die Schaltelemente.

## Beschreibung

Die Erfindung betrifft eine Stromversorgungsschaltungsanordnung mit einem DC/DC-Konverter. Eine solche Stromversorgungsschaltungsanordnung ist in (Schalt-)Netzteilen oder Ladegeräten (beispielsweise für Mobilfunkgeräte) einsetzbar, wo eine Netzwechselspannung mittels eines AC/DC-Konverters und dem DC/DC-Konverter in eine Versorgungsgleichspannung umgesetzt wird.

Konverter mit asymmetrischen Halbbrückentopologien sind grundsätzlich bekannt. Bekannte Konverter verfügen über Zero Voltage Switching der Halbbrückenschaltelemente. Die Schaltelemente werden mit pulsweitenmodulierten Steuersignalen mit konstanter Frequenz gesteuert. Ein optimales Rücksetzen ("reset") des Transformatorkerns ist gewährleistet. Die Streuinduktivität des Transformators wird genutzt. Die Spannungsbelastung der Schaltelemente ist gegenüber den ansonsten vielfach verwendeten Sperrwandlern (Flyback-Konvertern) reduziert. Die EMI-Belastung ("ElectroMagnetic Interference") durch asymmetrische Halbbrückenkonverter ist gering.

Aus der US 5,808,879 (Fig 9) ist ein als asymmetrischer Halbbrückenkonverter ausgeführter DC/DC-Konverter bekannt, bei dem eine ein erstes und ein zweites Schaltelement (als MOSFET-Transistoren ausgeführte Schaltelemente) aufweisende Halbbrücke vorgesehen ist, an die eine Gleichspannung angelegt wird, d.h. die Halbbrücke liegt zwischen einem ersten Gleichspannungspotential (Versorgungspotential "+") und einem zweiten Gleichspannungspotential (Bezugspotential "-", üblicherweise gleich dem Massepotential oder Erdpotential). Parallel zu dem ersten Schaltelement, das mit dem ersten Gleichspannungspotential verbunden ist, liegt ein Schaltungszweig, der die Primärwicklung eines Transformators und einen in Reihe zu der Primärwicklung liegenden Kondensator enthält. Der Kondensator ist zwischen dem Veibindungspunkt der beiden Schaltelemente und der Primärwicklung angeordnet. Die Primärwicklung des Transformators liegt zwischen dem Kondensator und dem ersten Gleichspannungspotential. Parallel zum Ausgang des DC/DC-Konverters liegt ein kapazitives Ausgangsfilter. Zwischen dem kapazitiven Ausgangsfilter und der Sekundärwicklung des Transformators ist eine Diode angeordnet. Während eines Energietransports von der Primärseite zur Sekundärseite des Konverters fließt auf der Primärseite ein Strom einerseits durch den parallel zum ausgeschalteten (geöffneten) ersten Schaltelement liegenden Schaltungszweig mit der Primärwicklung und dem Kondensator und andererseits auch durch das eingeschaltete (geschlossene) zweite Schaltelement.

Der beschriebene Konverter aus der US 5,808,879 hat den Vorteil, dass lediglich für das zweite Schaltelement ein Überstromschutz notwendig ist. Überströme, die zur Zerstörung eines Schaltelements führen, können in der Einschaltphase des Konverters und bei Überlast auftreten. Beim Einschalten des Konverters trägt der in Reihe zur Primärwicklung des Transformators liegende Kondensator noch keine Ladung. Dementsprechend steigt der Strom durch das zweite Schaltelement, durch den der Kondensator aufgeladen wird, in der Phase kurz nach dem Einschalten stark an. Das zweite Schaltelement ist dementsprechend vor Überströmen in der Einschaltphase des Konverters zu schützen. Vor Überströmen im Überlastfall ist dasjenige Schaltelement zu schützen, das Während der Energieübertragung von der Primär- zur Sekundärseite des Transformators eingeschaltet ist und von einem Strom durchflossen wird. Bei dem beschriebenen Konverter ist dies ebenfalls das zweite Schaltelement.

Der beschriebene Konverter aus der US 5,808,879 hat außerdem den Vorteil, dass der sogenannte Burst-Modus ("burst mode") automatisch durch Messung der Eingangsleistung auf der Primärseite des Transformators einstellbar ist. Der Burst-Modus wird für einen Stand-By-Betrieb einer Last mit reduzierter Leistungsaufnahme verwendet und ist dadurch gekennzeichnet, dass der Konverter im Wechsel ausgeschaltet und für kurze Zeit eingeschaltet wird. Ein Ausschalten des Konverters erfolgt insbesondere durch ein gleichzeitiges Ausschalten der beiden Schaltelemente. Während der Konverter ausgeschaltet ist, sind die Leerlaufverluste des Konverters minimal. Während der Konverter eingeschaltet ist, wird der Ausgangskondensator geladen, bis die Ausgangsspannung ihren Sollwert erreicht. Diese Abfolge von ein- und abgeschaltetem Betrieb bewirkt eine niedrige Leistungsaufnahme bei gleichzeitig zur Verfügung gestellter Ausgangsspannung. Der Burst-Modus ist nur sinnvoll bei geringer Last, da sonst die Ausgangsspannung während der Betriebspausen stark einbricht. Zur automatischen Aktivierung und Deaktivierung des Burst-Modus ist die Eingangs- oder die Ausgangsleistung des Konverters zu messen. Die Messung der Eingangsleistung ist gegenüber der Messung der Ausgangsleistung kostengünstiger, da die galvanische Trennung von Ausgangs- und Eingangsseite durch den Transformator nicht überbrückt werden muss. Die Eingangsleistung wird vorzugsweise durch Messung der Eingangsspannung und des Eingangsstromes gemessen. Die Messung des Eingangsstromes ist hier einfach durch Messung des Stromes durch das zweite Schaltelement möglich, wobei lediglich dem zweiten Schaltelement ein Messwiderstand ("shunt") in Reihe geschaltet wird, was hier deshalb so einfach möglich ist, da das zweite Schaltelement der einzige Strompfad zu dem mit dem zweiten Schaltelement gekoppelten Gleichspannungspotential ist. Eine besonders einfache Strommessung ergibt sich, wenn der Messwiderstand mit dem jeweiligen Bezugspotential (Masse- oder Erdpotential) verbunden ist, d.h. die Spannung am Messwiderstand gegenüber dem Bezugspotential gemessen werden kann.

Aus dem Konferenzbeitrag von Phua Chee Heng, Ramesh Oruganti, "Family of Two-Switch Soft-Switched Asymmetrical PWM DC/DC Converters", PESC 1994 ist eine noch ältere Version eines asymmetrischen Halbbrückenkonverters, des als Buck-reset-TRC2-Konverter bezeichnet wird, bekannt. Dieser hat allerdings nicht die beiden oben genannten Vorteile des Konverters aus Fig 9 der US 5,808,879.

Die beschriebenen Konverter sind mit und ohne Regelung der Ausgangsspannung ausführbar. Ist eine Regelung vorgesehen, so wird üblicherweise die Konverterausgangsspannung über einen Rückkopplungszweig mit einem Optokoppler, der zu erhöhten Kosten führt, rückgekoppelt und einer primärseitigen Steuerschaltung zugeführt, die in Abhängigkeit von der aktuellen Konverterausgangsspannung das Tastverhältnis ("duty cycle") der den Schaltelementen zugeführten Steuersignale anpasst, so dass die Ausgangsspannung konstant gehalten wird. Ohne Regelung der Ausgangsspannung müssen erhöhte Schwankungen der Konverterausgangsspannung insbesondere bei Schwankungen der Eingangsspannung und des Ausgangsstromes in Kauf genommen werden.

Der Erfindung liegt die Aufgabe zugrunde, einen asymmetrischen Halbbrückenkonverter zu schaffen, der die genannten Vorteile des Konverters aus der US 5,808,879 aufweist, eine Ausgangsspannung mit möglichst kleinem Toleranzbereich erzeugt und außerdem möglichst kostengünstig ist.

Die Aufgabe wird durch einen Konverter gemäß Patentanspruch 1 gelöst. Indem eine primärseitige Regelschleife vorgesehen wird, ist ein Optokoppler zur Realisierung eines Rückkopplungspfades nicht erforderlich, so dass sich eine Kostenersparnis ergibt. Die primärseitige Regelschleife wird nur durch sich auf der Primärseite befindende Schaltungsteile realisiert.

Bei einer primärseitigen Regelschleife wird insbesondere die Spannung, die während der Leistungsübertragung von der Primär- zur Sekundärseite der Primärwicklung des Transformators eingeprägt wird, auf einen vorgebbaren festen Wert geregelt, vorzugsweise durch Anpassung des Tastverhältnisses der zur Steuerung der Schaltelemente dienenden Steuersignale.

Im ungeregelten Betrieb würde die Spannung an der Primärwicklung und somit die von ihr abhängige Ausgangsspannung des DC/DC-Konverters in für viele Anwendungen nicht tolerierbarer Weise schwanken. Gründe hierfür sind Schwankungen der Eingangsspannung, Welligkeit der Eingangsspannung und Toleranzen des einstellbaren Tastverhältnisses aufgrund von Fertigungstoleranzen der Steuerschaltung, die insbesondere mittels eines integrierten Schaltkreises realisiert ist. Um Schwankungen der Spannung an der Primärwicklung bzw. der Konverterausgangsspannung entgegenzuwirken, wird die primärseitige Regelung verwendet. Die bei der primärseitigen Regelung anzupassenden Steuersignale zur Steuerung der Schaltelemente sind insbesondere pulsweitenmoduliert, d.h. eine Anpassung der Steuersignale erfolgt durch Anpassung des jeweiligen Tastverhältnisses. Anspruch 2 zeigt eine Variante mit einem zusätzlichen Kondensator.

Anspruch 3 gibt an, inwiefern die erfindungsgemäße Stromversorgungsschaltungsanordnung auszugestalten ist, um bei eingeschaltetem DC/DC-Konverter jederzeit durch Abgriff des Potentials zwischen der Primärwicklung und dem kapazitiven Element einen Messwert für die Spannung an der Primärwicklung zu erhalten. Da beim Energietransfer das mit dem zweiten Gleichspannungspotential gekoppelte zweite Schaltelement eingeschaltet ist und das kapazitive Element mit dem ersten Gleichspannungspotential gekoppelt ist, repräsentiert das Potential zwischen dem kapazitiven Element und der Primärwicklung unabhängig vom Zeitpunkt innerhalb eines Schaltzyklus die Spannung an der Primärwicklung des Transformators beim Energietransfer von der Primär- zur Sekundärseite, so dass auf diese Weise die Konverterausgangsspannung mit für viele Anwendungen (z. B. Ladegeräte für Mobiltelephone) mit ausreichender Toleranz eingestellt wird. Grundsätzlich funktioniert der Ansatz mit einer primärseitigen Regelung auch, wenn ein Energietransfer von der Primär- zur Sekundärseite im anderen Zustand der Halbbrücke oder im Fall einer Zweiweggleichrichtung in beiden Zuständen der Halbbrücke erfolgt.

Die Ansprüche 4 bis 7 geben Ausgestaltungen der erfindungsgemäßen Stromversorgungs-Schaltungsanordnung an. Weitere Abwandlungen zur Ausgestaltung nach Anspruch 6 beinhalten die Verwendung von induktiven Ausgangsfiltern und/oder einer Zweiweggleichrichtung. Anspruch 8 bezieht sich auf einen erfindungsgemäßen DC/DC-Konverter. Die Ansprüche 9 und 10 beziehen sich auf die erfindungsgemäße Schaltungsanordnung und den erfindungsgemäßen DC/DC-Konverter, die den Einsatz einer primärseitigen Regelschleife ermöglicht. Anspruch 11 bezieht sich auf ein elektrisches Gerät mit einer erfindungsgemäßen Schaltungsanordnung, das beispielsweise ein Ladegerät für ein Mobiltelephon ist.

Ausführungsbeispiele der Erfindung werden nachstehend anhand der Zeichnungen näher erläutert. Es zeigen:
- Fig. 1: ein elektrisches Gerät mit einer erfindungsgemäßen Stromversorgungsschaltungsanordnung,
- Fig. 2: einen in der Stromversorgungsschaltungsanordnung verwendeten DC/DC-Konverter,
- Fig. 3: den Konverter aus Fig.2 mit einer primärseitigen Regelschleife und
- Fig. 4: einen Variante zum Konverter ganaß Fig.3.

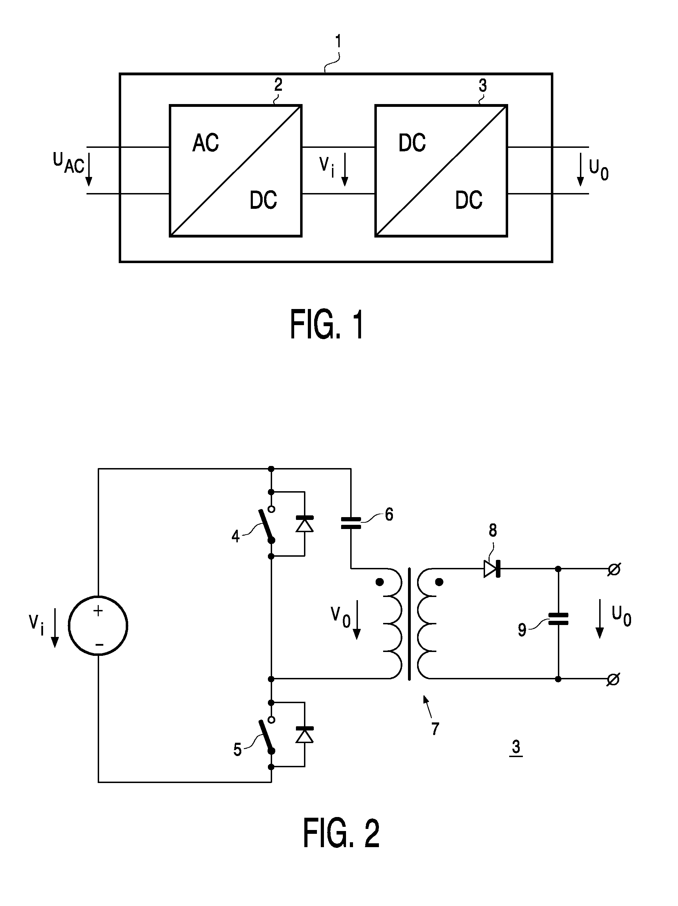

Fig.1 zeigt elektrisches Gerät 1 mit einer Stromversorgungsschaltungsanordnung, die einen AC/DC-Konverter 2 und DC/DC-Konverter 3 enthält. Das elektrische Gerät 1 setzt eine Netzwechselspannung (z. B. 230 Volt) U_{AC} in eine Versorgungsgleichspannung U₀ um. Dabei wird zunächst mittels des AC/DC-Konverters 2 die Netzwechselspannung U_{AC} in eine Gleichspannung Vᵢ umgesetzt, die als Eingangsspannung für den DC/DC-Konverter 3 dient und von diesem in die Versorgungsgleichspannung U₀ umgesetzt wird. Das elektrische Gerät 1 ist ein (Schalt-) Netzteil oder vorzugsweise ein Ladegsrät für Mobiltelefone. AC/DC-Konverter sind bekannt, so dass auf den Konverter 2 nicht näher eingegangen wird Die Erfindung bezieht sich vielmehr auf die Realisierung des DC/DC-Konverters 3, der mittels der Figuren 2 bis 4 näher erläutert wird

Fig 2 zeigt eine erste Variante des DC/DC-Konverters 3. Diesem wird eingangsseitig die Gleichspannung Vᵢ zugeführt, die an der Reihenschaltung aus zwei Schaltelementen 4 und 5 angelegt wird. Dabei ist das positive Versorgungspotential (+) mit einem Anschluss des Schaltelements 4 verbunden. Das Bezugspotential (-), d.h. Masse-oder Erdpotential ist mit dem Schaltelement 5 verbunden, dessen anderer Anschluss mit dem Schaltelement 4 verbunden ist. Parallel zum Schaltelement 4 liegt ein Schaltungszweig mit einem kapazitiven Element 6 und der in Reihe zum kapazitiven Element 6 liegenden Primärwicklung eines Transformators 7, dessen Wickelsinn (Orientierung/Polarität der Wicklungen) durch Punkte gekennzeichnet ist. Ein Anschluss der Sekundärwicklung des Transformators 7 ist mit der Anode einer Diode 8 verbunden. Zwischen der Katode der Diode 8 und dem anderen Anschluss der Sekundärwicklung des Transformators 7 liegt ein kapazitives Ausgangsfilter, das hier mittels eines Kondensators 9 realisiert ist. Am kapazitiven Ausgangsfilter 9 wird die Ausgangsgleichspannung U₀ des DC/DC-Konverters 3 abgegriffen.

Die Schaltelemente 4 und 5 werden im Wechsel mit vorgebbarem Tastverhältnis ein- bzw. ausgeschaltet. Bei ausgeschaltetem Schaltelement 4 und eingeschaltetem Schaltelement 5 erfolgt ein Energietransport von der Primärseite des Konverters 3 über den Transformator 7 zur Sekundärseite des Konverters 3. Dabei generiert die Gleichspannung Vᵢ einen Stromfluss durch den Schaltungszweig mit dem kapazitiven Element 6 und der Primärwicklung des Transformators 7 sowie durch das Schaltelement 5. An der Primärwicklung des Transformators 7 fällt dabei wie eingezeichnet eine Spannung V₀ ab. Mit dem gewählten Wicklungssinn des Transformators 7 und der vorliegenden Polung der Diode 8 wird an der Sekundärwicklung des Transformators 7 ein Stromfluss durch die Diode 8 generiert. Der Wickelsinn der Primär- und Sekundärwicklung des Transformators so gewählt ist, dass ein Energiefluss von der Primär- zur Sekundärseite des Transformators 7 im wesentlichen dann erfolgt, wenn ein Strom durch das zweite Schaltelement 5 fließt. Mittels des Stromflusses durch die Diode 8 wird der Kondensator 9 geladen und/oder ein Stromfluss an eine angeschlossene Last generiert.

Ist das Schaltelement 4 eingeschaltet und das Schaltelement 5 ausgeschaltet, kehrt sich die Polung der Spannung V₀ an der Primärwicklung des Transformators 7 um und es fließt ein Strom durch das kapazitive Element 6, das Schaltelement 4 und die Primärwicklung des Transformators 7. In diesem Betriebszustand des Konverters 3 wird die Magnetisierung des Kerns des Transformators 7 abgebaut ("Reset" des Transformatorkerns).

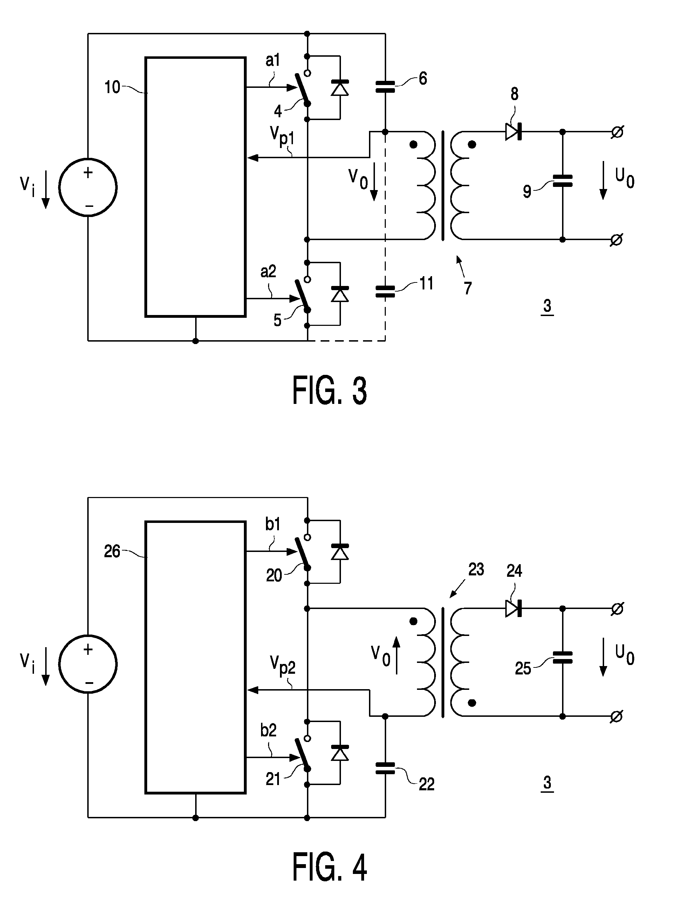

Fig.3 zeigt den DC/DC-Konverter gemäß Fig.2 erweitert um eine primärseitige Regelschleife. Diese beinhaltet, dass ein Punkt zwischen dem kapazitiven Element 6 und der Primärwicklung des Transformators 7 mit einem Eingang einer Steuerschaltung 10 verbunden ist, so dass das an dem betreffenden Punkt anliegende Potential Vₚ₁, das die Spannung V₀ an der Primärwicklung des Transformators 7 repräsentiert, der Steuerschaltung zugeführt wird. Die Steuerschaltung 10 erzeugt in Abhängigkeit vom Potential Vₚ₁ ein Steuersignal a1 zur Steuerung des Schaltelements 4 und ein Steuersignal a2 zur Steuerung des Schaltelements 5. Das Tastverhältnis der Steuersignale a1 und a2 wird von der Steuerschaltung 10 so eingestellt und angepasst, dass die Spannung V₀, die bei einem Energiefluss von der Primärseite zur Sekundärseite des Konverters 3 an der Primärwicklung des Transformators 7 abfällt, auf einen vorgebbaren Spannungswert geregelt wird. Durch diese Regelung wird die Ausgangsspannung U₀, die von der Spannung V₀ abhängt, eingestellt. Durch die primärseitige Regelschleife wird einem unerwünschten Einfluss von Schwankungen der Eingangsspannung Vᵢ, eines Rippels (insbesondere 100 Hz) und von Ungenauigkeiten bei der Einstellung des Tastverhältnisses der Steuersignale a1 und a2 auf Grund von Fertigungstoleranzen bei der Steuerschaltung 10 die üblicherweise mittels eines integrierten Schaltkreises realisiert wird, entgegengewirkt, so dass eine brauchbare Ausgangsgleichspannung U₀ mittels des Konverters 3 zur Verfügung gestellt wird. Bei der bevorzugten Ausführungsform wird die Regelung allein durch Einstellung des Tastverhältnisses der Steuersignale a1 und a2 umgesetzt. Grundsätzlich ist aber auch eine Anpassung der Frequenz der Steuersignale a1 und a2 zu dem genannten Zwecke möglich, was allerdings die Komplexität der primärseitigen Regdschleife erhöht. In einer Schaltungsvariante wird ein Punkt zwischen dem Kondensator 6 und der Primärwicklung des Transformators 7 mittels eines weiteren Kondensators 11 mit dem Bezugspotential verbunden (Veibindungen zum Kondensator 11 sind gestrichelt gszeichnet).

Fig 4 zeigt eine Variante des DC/DC-Konverters 3. Die Grundstruktur ist sehr ähnlich zu der Struktur des Konverters 3. Eine Gleichspannung Vᵢ wird an zwei in Reihe geschaltete Schaltelemente 20 und 21 angelegt, wobei das Versorgungspotential (+) mit dem Schaltelement 20 und das Bezugspotential (-) mit dem Schaltelement 21 verbunden ist. Im vorliegenden Fall ist allerdings dem mit dem Bezugspotential verbundenen Schaltelement 21 der Schaltungszweig mit einer Reihenschaltung aus der Primärwicklung eines Transformators 23 und einem kapazitiven Element 22 parallel geschaltet. Zwischen einem durch einen Kondensator 25 realisiertem kapazitiven Ausgangsfilter 25 und der Sekundärwicklung des Transformators 23 liegt eine Diode 24 mit Flussrichtung in Richtung des Konverterausgangs. Dabei wird die Konverterausgangsspannung U₀ am Kondensator 25 abgegriffen.

Im Gegensatz zu Fig 3 sind die Primärwicklung und die Sekundärwicklung des Transformators 23 nun gegensinnig gepolt. Dementsprechend findet ein Energietransfer von der Primärseite zur Sekundärseite des Konverters 3 bei ausgeschaltetem Schaltelement 20 und eingeschaltetem Schaltelement 21 statt. Dabei fließt ein Strom durch die Primärwicklung des Transformators 23, durch das Schaltelement 21 und durch das kapazitive Element 22. An der Primärwicklung 23 fällt eine Spannung V₀ in der eingezeichneten Richtung ab, so dass durch die Diode 24 ein Strom in den Kondensator und/oder eine am Ausgang des Konverters 3 angeschlossene Last fließt. Die dabei von der Primär- zur Sekundärseite fließende Energie wird vom kapazitiven Element 22 geliefert. Dieses wird aufgeladen, wenn das Schaltelement 20 eingeschaltet und das Schaltelement 21 ausgeschaltet ist, so dass ein durch die Spannung Vᵢ generierter Strom durch das Schaltelement 20, die Primärwicklung des Transformators 23 und das kapazitive Element 22 fließt, wobei bei dieser Stromrichtung durch die Primärwicklung des Transformators kein Energietransfer von der Primärseite zur Sekundärseite des Konverters 3 stattfindet.

Auch die Konvertervariante gemäß Fig.4 weist eine primärseitige Regelschleife auf. Diese beinhaltet, dass eine zwischen der Primärwicklung des Transformators 23 und dem kapazitiven Element 22 anstehendes Potential Vₚ₂ abgegriffen und der Steuerschaltung 26 zugeführt wird. Dieses Potential Vₚ₂, das die bei einem Energiefluss von der Primär- zur Sekundärseite des Konverters 3 an der Primärwicklung des Transformators 23 anliegende Spannung V₀ repräsentiert, wird mittels Einstellung des Tastverhältnisses der Steuersignale b1 und b2, die zur Steuerung der Schaltelemente 20 bzw. 21 dienen und von der Steuerschaltung 26 erzeugt werden, auf einen vorgebbaren Wert geregelt, d.h. auch die Spannung V₀ wird auf einen vorgebbaren Wert geregelt . Auch bei der Variante gemäß Fig 4 kann optional ein zusätzlicher Kondensator (nicht eingezeichnet) eingesetzt werden, der dann einen Punkt zwischen dem Kondensator 22 und der Primärwicklung des Transformators 23 mit dem Versorgungspotential verbindet.

Die Konvertervarianten nach Fig.2 bis 4 haben den Vorteil, dass die auf einen vorgebbaren Wert konstant zu regelnde Spannung V₀, die während eines Energietransfers von der Primärzur Sekundärseite des Konverters an der Primärwicklung des Transformators 7 bzw. des Transformators 23 anliegt, unabhängig vom Zeitpunkt innerhalb eines Schaltzyklus durch das Potential Vₚ₁ bzw. Vₚ₂ repräsentiert wird; diese Potentiale können als Regelgröße verwendet werden. Dies wird dadurch ermöglicht, dass das kapazitive Element 6 mit dem Versorgungspotential (+) bzw. mit dem Bezugspotential (-) verbunden ist und andererseits ein Anschluss der Primärwicklung des Transformators 7 bzw. des Transformators 23 mit der Verbindung zwischen den Schaltelementen 4 und 5 bzw. 20 und 21 verbunden ist. Bei den Konvertervarianten nach Fig.2 bzw. Fig 3 ist lediglich eines der Schaltelemente der jeweiligen Halbbrücke, und zwar das Schaltelement 5, mit einem Überstromschutz zu versehen, der vor Überströmen in der Anlaufphase und bei Überlast des Konverters 3 schützt. Der Konverter in Fig 4 benötigt hingegen einen Überstromschutzelement in beiden Schaltelementen 20 und 21, so dass Schaltelement 20 gegen Überströme in der Anlaufphase und Schaltelement 21 bei Überlast des Konverters geschützt ist.

Die Konvertervariante gemäß Fig.2 und 3 hat außerdem den Vorteil, dass eine Messung der Eingangsleistung des Konverters 3 durch Messung der Spannung Vᵢ und des Stromes durch das Schaltelement 4 dadurch möglich ist, dass zwischen dem Schaltelement 5 und dem Bezugspotential (Masse-oder Erdpotential) ein (nicht dargestellter) Messwiderstand (shunt) angeordnet wird, wobei die Strommessung mittels eines an Masse- bzw. Erdpotential liegenden Messwiderstands besonders einfach und zuverlässig ist. Weiterhin können die Ausführungsbeispiele in Fig 3 und 4 grundsätzlich auch so abwandelt werden, dass ein anderer Wickelsinn des Transformators 7 gewählt wird

## Patentansprüche

1. Stromversorgungsschaltungsanordnung (2, 3) mit einem DC/DC-Konverter (3) mit
- einer ein erstes (4, 21) und ein zweites (5, 20) Schaltelement aufweisenden und im Betrieb der Stromversorgungsschaltungsanordnung (2, 3) zwischen einem ersten und zweiten Gleichspannungspotential liegenden Halbbrücke,
- einem Transformator (7, 23), dessen Primärwicklung gemeinsam mit einem ersten kapazitiven Element (6, 22) in einem parallel zum ersten Schaltelement (4, 21) liegenden Schaltungszweig angeordnet ist, wobei das kapazitive Element innerhalb des Schaltungszweiges in Reihe zu der Primärwicklung liegt und
- einer primärseitigen Regelschleife zur Regelung der Spannung (V₀) an der Primärwicklung des Transformators (7, 23) durch Anpassung von Steuersignalen (a1, a2, b1, b2) für die Schaltelemente.

2. Stromversorgungsschaltungsanordnung nach Anspruch 1,,
**dadurch gekennzeichnet,**
**dass** die Verbindung zwischen dem ersten kapazitiven Element (6) und der Primärwicklung mittels eines zweiten kapazitiven Elements (11) mit demjenigen Gleichspannungspotential (-) verbunden ist, das mit einem Anschluss des zweiten Schaltelements (5) gekoppelt ist

3. Stromversorgungsschaltungsanordnung nach Anspruch 1 oder 2,
**dadurch gekennzeichnet,**
**dass** vorgesehen ist, einen Anschluss des ersten kapazitiven Elements (6, 22) mit dem ersten Gleichspannungspotential und einen Anschluss des zweiten Schaltelements (5, 20) mit dem zweiten Gleichspannungspotential zu koppeln.

4. Stromversorgungsschaltungsanordnung nach Anspruch 3,
**dadurch gekennzeichnet,**
**dass** das erste Schaltelement (4) mit einem Versorgungspotential (+) und das zweite Schaltelement (5) mit einem Bezugspotential (-) gekoppelt ist und
**dass** ein Energietransport von der Primärseite zur Sekundärseite bei ausgeschaltetem ersten (4) und eingeschaltetem zweiten (5) Schaltelement erfolgt.

5. Stromversorgungsschaltungsanordnung nach Anspruch 3,
**dadurch gekennzeichnet,**
**dass** das erste Schaltelement (21) mit einem Bezugspotential (-) und das zweite Schaltelement (20) mit einem Versorgungspotential (+) gekoppelt ist und
**dass** ein Energietransport von der Primärseite zur Sekundärseite bei eingeschaltetem ersten (21) und ausgsschaltetem zweiten (20) Schaltelement erfolgt.

6. Stromversorgungsschaltungsanordnung nach einem der Ansprüche 1 bis 5,
**dadurch gekennzeichnet,**
**dass** ein Anschluss der Primärwicklung mit einem Punkt zwischen dem ersten (5,21) und zweiten (4, 20) Schaltelement verbunden ist,
**dass** der andere Anschluss der Primärwicklung mit einem Anschluss des ersten kapazitiven Elements (6, 22) verbunden ist und
**dass** eine Regelung eines Potentials (Vₚ₁, Vₚ₂) zwischen der Primärwicklung und dem kapazitiven Element vorgesehen ist.

7. Stromversorgungsschaltungsanordnung nach einem der Ansprüche 1 bis 6,
**dadurch gekennzeichnet,**
**dass** auf der Sekundärseite des Transformators (7, 23) eine Diode (8, 24) und ein kapazitives Ausgangsfilter (9, 25) angeordnet sind, so dass bei einem Energiefluss von der Primärseite zur Sekundärseite des Transformators (7, 23) ein Strom durch die Diode (8, 24) zum kapazitiven Ausgangsfilter (9, 25) fließt.

8. DC/DC-Konverter (3) mit
- einer ein erstes (4, 21) und ein zweites (5, 20) Schaltelement aufweisenden und im Betrieb des Konverters (3) zwischen einem ersten und zweiten Gleichspannungspotential liegenden Halbbrücke,
- einem Transformator (7, 23), dessen Primärwicklung gemeinsam mit einem kapazitiven Element (6, 22), in einem parallel zum ersten Schaltelement (4, 21) liegenden Schaltungszweig angeordnet ist, wobei das kapazitive Element innerhalb des Schaltungszweiges in Reihe zu der Primärwicklung liegt und
- einer primärseitigen Regelschleife zur Regelung der Spannung (V₀) an der Primärwicklung des Transformators (7, 23) durch Anpassung von Steuersignalen (a1, a2, b1, b2) für die Schaltelemente.

9. Stromversorgungsschaltungsanordnung mit einem DC/DC-Konverter (3) mit
- einer ein erstes (4) und ein zweites (5) Schaltelement aufweisenden und im Betrieb der Stromversorgungsschaltungsanordnung zwischen einem Versorgungspotential (+) und einem Bezugspotential (-) liegenden Halbbrücke,
- einem Transformator (7), dessen Primärwicklung gemeinsam mit einem kapazitiven Element (6) in einem parallel zum ersten Schaltelement (4) liegenden Schaltungszweig angeordnet ist, wobei das kapazitive Element innerhalb des Schaltungszweiges in Reihe zu der Primärwicklung liegt und wobei vorgesehen ist, einen Anschluss des kapazitiven Elements (6) mit dem Versorgungspotential (+) und einen Anschluss des zweiten Schaltelements (5) mit dem Bezugspotential (-) zu verbinden und wobei der Wickelsinn der Primär- und Sekundärwicklung des Transformators so gewählt ist, dass ein Energiefluss von der Primär- zur Sekundärseite des Transformators (7) im wesentlichen dann erfolgt, wenn ein Strom durch das zweite Schaltelement (5) fließt.

10. DC/DC-Konverter mit
- einer ein erstes (4) und ein zweites (5) Schaltelement aufweisenden und im Betrieb der Stromversorgungsschaltungsanordnung zwischen einem Versorgungspotential (+) und einem Bezugspotential (-) liegenden Halbbrücke,
- einem Transformator (7), dessen Primärwicklung gemeinsam mit einem kapazitiven Element (6) in einem parallel zum ersten Schaltelement (4) liegenden Schaltungszweig angeordnet ist, wobei das kapazitive Element innerhalb des Schaltungszweiges in Reihe zu der Primärwicklung liegt und wobei vorgesehen ist, einen Anschluss des kapazitiven Elements (6) mit dem Versorgungspotential (+) und einen Anschluss des zweiten Schaltelements (5) mit dem Bezugspotential (-) zu verbinden und wobei der Wickelsinn der Primär- und Sekundärwicklung des Transformators so gewählt ist, dass ein Energiefluss von der Primär- zur Sekundärseite des Transformators (7) im wesentlichen dann erfolgt, wenn ein Strom durch das zweite Schaltelement (5) fließt.

11. Elektrisches Gerät (1) zur Umwandlung einer Wechselspannung (U_{AC}) in eine Versorgungsgleichspannung (U₀) mit einer Stromversorgungsschaltungsanordnung (2, 3) nach einem der Ansprüche 1 bis 6 oder nach Anspruch 8.
